# EUROPEAN PATENT APPLICATION

(11) **EP 1 679 642 A1**
(43) Date of publication of application: **12.07.2006**
(21) Application number: 04792924.5
(22) Date of filing: 25.10.2004
(51) Int. Cl.: G06Q 10/00

(54) **FACILITY DEVICE COST ESTIMATION PROGRAM AND COST ESTIMATION DEVICE**

(30) Priority: 29.10.2003 JP 2003369084
(71) Applicant: DAIKIN INDUSTRIES, LTD., Osaka-shi, Osaka 530-8323 (JP)
(72) Inventor: KUMAMOTO, Gen, c/o Daikin Industries, Ltd., Kusatsu-shi, Shiga 5258526 (JP)
(74) Representative: Goddar, Heinz J.
(86) International application number: PCT/JP2004/015793
(87) International publication number: WO 2005/041090

(57) **Abstract**

An equipment cost estimate calculation program having an input prompt step, a first, second, and third estimated running cost calculation steps, a no-maintenance action total cost estimate calculation step, a maintenance or other action total cost estimate calculation step, a new-equipment installation total cost estimate calculation step, and an output step. In the estimated running cost calculation steps, performance data is used to calculate running cost estimates. The no-maintenance action total cost estimate is calculated from the first running cost estimate, and the maintenance or other action total cost estimate value is calculated from the second running cost estimate and the maintenance or other action cost data. The new-equipment installation total cost estimate is calculated from the third running cost estimate and the new-equipment installation cost data. In the output step, the no-maintenance action total cost estimate, the maintenance or other action total cost estimate, and the new-equipment installation total cost estimate are output.

## Description

### TECHNICAL FIELD

The present invention relates to an equipment cost estimate calculation program and an equipment cost estimate calculation apparatus that are used for estimating the best choice in terms of future costs, selected from leaving equipment unchanged without maintenance or repair, maintaining or repairing equipment, and discarding equipment and installing new equipment, when equipment has become obsolete or broken down, or has undergone a periodic inspection.

### BACKGROUND ART

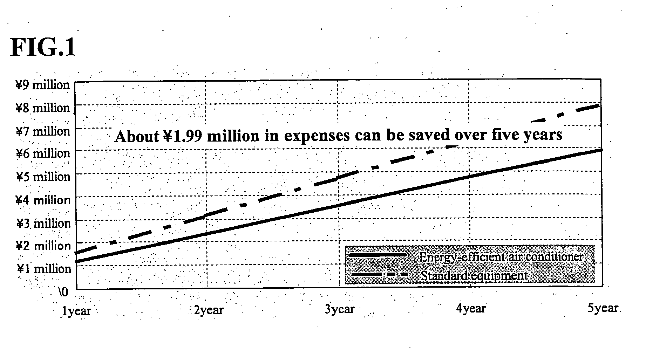

Conventionally, programs for creating graphs that can easily determine the difference between the running costs of standard equipment and the running costs of new energy-efficient equipment are installed and executed in a computer, as shown in FIG. 1. Such graphs are mainly created for new clients and clients considering a purchase of energy-efficient equipment as a replacement for standard equipment.

### DISCLOSURE OF THE INVENTION

In recent years, however, equipment manufacturers, equipment retailers, and other companies are expanding not only new-equipment sales businesses that develop and sell new equipment, and repair service businesses that provide a repair service when equipment breaks down, but also inspection and maintenance service businesses that provide continuous inspection and repair services for customers who have purchased equipment. Equipment manufacturers, equipment retailers, and other companies are continuing to improve their brand strength by improving the level of satisfaction of all customers of these businesses, but the objective cannot be achieved using solely graphs such as those described above.

It is an object of the present invention to provide an equipment cost estimate calculation program and an equipment cost estimate calculation apparatus that can improve the level of satisfaction of all customers of the new-equipment sales businesses, repair service businesses, and inspection and maintenance service businesses, and that can consequently create graphs, tables, and other aids capable of enhancing the brand strength of a company.

An equipment cost estimate calculation program according to a first aspect of the present invention has an input prompt step, a first estimated running cost calculation step, a second estimated running cost calculation step, a third estimated running cost calculation step, a no-maintenance action total cost estimate calculation step, a maintenance or other action total cost estimate calculation step, a new-equipment installation total cost estimate calculation step, and an output step. In the input prompt step, a prompt is issued for the computer to receive equipment data that includes first estimated performance data, second estimated performance data, third performance data, maintenance or other action cost data, and new-equipment installation cost data. As used herein, the term "first estimated performance data" refers to performance data of current equipment estimated when a no-maintenance action is carried out. The term "no-maintenance action" refers to an action in which the current equipment is not maintained or repaired and is left as-is after the current equipment has become obsolete or broken down, or undergone a periodic inspection. The term "become obsolete" refers to the case in which the performance of the current equipment has deteriorated due to age and reached a predetermined state. The degree of obsoleteness may be set at different levels. The term "second estimated performance data" refers to performance data of the current equipment estimated when maintenance or other action is carried out. The term "maintenance or other action" refers to an action in which the current equipment is maintained or repaired after the current equipment has become obsolete or broken down, or undergone a periodic inspection. The term "third performance data" refers to performance data of new equipment. The term "maintenance or other action cost data" refers to data of the required cost for the maintenance or other action. The term "new-equipment installation cost data" refers to data of the required cost for installing the new equipment. The term "performance data" refers to energy consumption data or the like. The term "input prompt" specifically refers to an input page display or the like. The input carried out in this case may be manual input or automatic input from the equipment. In the first estimated running cost calculation step, the first estimated performance data is used to calculate in the computer a first running cost estimate. As used herein, the term "first running cost estimate" refers to the estimated value of the running cost of the current equipment when the no-maintenance action is carried out. The term "running cost" refers to required expenses as a result of operating equipment, and is, for example, the cost of expendable parts and expenses for the amount of energy that the equipment consumes. The running cost is determined using statistical data analysis, case-based corollaries, topological case-based modeling (TCBM: a modeling technique in which a framework of case-based corollaries is applied, and which can be applied to common cases in which the continuity of an input/output relationship is valid based on a topological concept), and the like. In the second estimated running cost calculation step, the second estimated performance data is used to calculate in the computer a second running cost estimate. As used herein, the term "second running cost estimate" refers to the estimated value of the running cost of the current equipment when the maintenance or other action is carried out. In the third estimated running cost calculation step, the third performance data is used to calculate in the computer a third running cost estimate. As used herein, the term "third running cost estimate" refers to the estimated value of the running cost of the new equipment. In the no-maintenance action total cost estimate calculation step, at least a first running cost estimate is used to calculate in the computer the no-maintenance action total cost estimate. As used herein, the term "no-maintenance action total cost estimate" refers to the estimated value of the total cost for the prescribed period of time required when the no-maintenance action is carried out. In the maintenance or other action total cost estimate calculation step, at least the second running cost estimate and the maintenance or other action cost data are used to calculate in the computer the maintenance or other action total cost estimate. As used herein, the term "maintenance or other action total cost estimate" refers to the estimated value of the total cost for the prescribed period of time required when the maintenance or other action is carried out. In the new-equipment installation total cost estimate calculation step, at least the third running cost estimate and the new-equipment installation cost data are used to calculate in the computer the new-equipment installation total cost estimate. As used herein, the term "new-equipment installation total cost estimate" refers to the estimated value of the total cost for the prescribed period of time required when the current equipment is discarded after the current equipment has become obsolete or broken down, or after a periodic inspection has been performed, and the new equipment is installed. In the output step, the no-maintenance action total cost estimate, the maintenance or other action total cost estimate, and the new-equipment installation total cost estimate are output from the computer. As used herein, the term "output" refers to printer output, display output, file output, output to another device via a network, or other output. In the case of file output, the file may be automatically attached to electronic mail and sent to another device.

When the program is executed, first, a prompt is issued in the input prompt step to present the computer with equipment data that includes first estimated performance data, second estimated performance data, third performance data, maintenance or other action cost data, and new-equipment installation cost data. Next, in the first estimated running cost calculation step, the computer uses the first estimated performance data to calculate the first running cost estimate. Next, in the second estimated running cost calculation step, the computer uses the second estimated performance data to calculate the second running cost estimate. Subsequently, in the third estimated running cost calculation step, the computer uses the third performance data to calculate the third running cost estimate. Next, in the no-maintenance action total cost estimate calculation step, the computer uses at least the first running cost estimate to calculate the no-maintenance action total cost estimate. Next, in the maintenance or other action total cost estimate calculation step, the computer uses at least the second running cost estimate and the maintenance or other action cost data to calculate the maintenance or other action total cost estimate. Next, in the new-equipment installation total cost estimate calculation step, the computer uses at least the third running cost estimate and the new-equipment installation cost data to calculate the new-equipment installation total cost estimate. In the output step, the computer outputs the no-maintenance action total cost estimate, the maintenance or other action total cost estimate, and the new-equipment installation total cost estimate. Consequently, if, for example, such output results can be printed in a pamphlet or otherwise published together with conventional graphs, tables, and the like, and the pamphlet provided to customers, the customers can obtain, from the aspect of total cost required in a fixed amount of time, the most effective action method for current equipment at any time, the best timing for installing new equipment, and other information. Therefore, better satisfaction can be provided to all customers of a new-equipment sales business, repair service businesses, and inspection and maintenance service businesses, and the brand strength of a company can therefore be enhanced.

An equipment cost estimate calculation program according to a second aspect of the present invention is the equipment cost estimate calculation program as recited in Claim 1, wherein a first repair pattern or a first maintenance pattern, and a second repair pattern or a second maintenance pattern are included in the repair or the maintenance.

Here, it is possible to set a plurality of repair patterns or maintenance patterns. Examples thereof include substantially complete repair and emergency repairs to extend equipment life by only half a year. Consequently, the customer is provided with a wider range of choices, and customer satisfaction can be expected to improve.

An equipment cost estimate calculation program according to a third aspect of the present invention is the equipment cost estimate calculation program as recited in Claim 1 or Claim 2, wherein the no-maintenance action total cost estimate, the maintenance or other action total cost estimate, and the new-equipment installation total cost estimate are output to the same sheet or same page in the computer in the output step.

Here, when the program is executed, the computer outputs to the same sheet or the same page in the output step the no-maintenance action total cost estimate, the maintenance or other action total cost estimate, and the new-equipment installation total cost estimate. Consequently, the customer can easily compare and consider these total cost estimates.

An equipment cost estimate calculation program.according to a fourth aspect of the present invention is the equipment cost estimate calculation program as recited in any of Claim 1 to Claim 3, wherein the equipment data further includes discard cost data of the current equipment. Also, the new-equipment installation total cost estimate is calculated in the computer in the new-equipment installation total cost estimate calculation step by using the third running cost estimate, the new-equipment installation cost data, and the discard cost data of the current equipment.

Here, when the program is executed, the computer uses the third running cost estimate, the new-equipment installation cost data, and the discard cost data of the current equipment to calculate in the new-equipment installation total cost estimate calculation step the new-equipment installation total cost estimate. Consequently, the customer can obtain a total cost estimate with consideration given to the disposal cost of current equipment. Therefore, the customer can study with greater precision the total cost estimate. In the case that the equipment is a home appliance product, the disposal cost stipulated in the home appliance recycling law is preferably given consideration. In the case that the equipment is large equipment for business use or the like, the cost required for disassembly by specialists, the cost required parts storage, ground preparation, and the like, and other costs can be given consideration.

An equipment cost estimate calculation program according to a fifth aspect of the present invention is the equipment cost estimate calculation program as recited in any of Claim 1 to Claim 5, further having a residual life expectancy calculation step. In the residual life expectancy calculation step, the value of the residual life expectancy of the current equipment or the new equipment is calculated in the computer by using the first estimated performance data, the second estimated performance data, or the third performance data. The value of the residual life expectancy is further output from the computer in the output step.

Here, when the program is executed, the computer uses the first estimated performance data, the second estimated performance data, or the third performance data to calculate in the residual life expectancy calculation step the value of the residual life expectancy of the current equipment or the new equipment. In the output step, the computer further outputs the value of the residual life expectancy. Consequently, the customer can be informed at any time of the estimated end of the term of the current equipment. Therefore, the customer can be encouraged to maintain/repair current equipment or to install new equipment with suitable timing. When the residual life expectancy is very low, it is possible to consider recommending taking no action or taking another action.

An equipment cost estimate calculation program according to a sixth aspect of the present invention is the equipment cost estimate calculation program as recited in any of Claim 1 to Claim 5, further having a carbon dioxide emission forecast calculation step. In the carbon dioxide emission forecast calculation step; the carbon dioxide emission forecast of the current equipment or the new equipment is calculated in the computer by using the first estimated performance data, the second estimated performance data, or the third performance data. The carbon dioxide emission forecast is further output from the computer in the output step.

Here, when the program is executed, the computer uses the first estimated performance data, the second estimated performance data, or the third performance data to calculate in the carbon dioxide emission forecast calculation step a carbon dioxide emission forecast of the current equipment or the new equipment. The computer further outputs the carbon dioxide emission forecast in the output step.

In Japan, a "domestic emissions trading" system is set to be comprehensively implemented in the near future on the basis of the Kyoto Protocol Treaty. In the first step (2002 to 2004), which was the run-up period for implementing the system, business participation was voluntary, but when an actual emission amount is recorded in which a business has exceeded a self-determined emission limit, there is a possibility that the name of the business will be made public and the image of the business damaged in the worst case. For this reason, such businesses can be encouraged to maintain or repair current equipment or to install new equipment. On the other hand, in the "domestic emissions trading" system, if the actual amount of emissions is within an allotted emissions limit, the surplus emission allowance can be saved and it is possible to consider certain cases in which the surpluses are traded between businesses and become a source of revenue for a business. Consequently, businesses and the like anticipating such profit can be encouraged to maintain or repair current equipment or to install new equipment.

An equipment cost estimate calculation program according to a seventh aspect of the present invention is the equipment cost estimate calculation program as recited in any of Claim 1 to Claim 6, wherein a regulatory line is further output from the computer in the output step. The term "regulatory line" refers to a line stipulated, for example, by laws related to energy consumption, laws related to the efficient use of energy (so-called energy conservation laws), and the like.

Here, when the program is executed, the computer further outputs a regulatory line in the output step. For this reason, the customer can be encouraged to avoid violating the law, and to maintain/repair current equipment or install new equipment.

An equipment cost estimate calculation program according to an eighth aspect of the present invention is the equipment cost estimate calculation program as recited in any of Claim 1 to Claim 7, wherein the result of the output is displayed as a graph.

Here, information can be provided to customers in a more easily understood format.

An equipment cost estimate calculation apparatus according to a ninth aspect of the present invention has input means, a first estimated running cost calculation means, a second estimated running cost calculation means, a third estimated running cost calculation means, a no-maintenance action total cost estimate calculation means, a maintenance or other action total cost estimate calculation means, a new-equipment installation total cost estimate calculation means, and an output means. The input means are used to input equipment data that includes the first estimated performance data, the second estimated performance data, the third performance data, the maintenance or other action cost data, and the new-equipment installation cost data. As used herein, the term "first estimated performance data" refers to performance data of current equipment estimated when a no-maintenance action is carried out. The term "no-maintenance action" refers to an action in which the current equipment is not maintained or repaired but is left as-is after the current equipment has become obsolete or broken down, or has undergone a periodic inspection. The term "second estimated performance data" refers to performance data of the current equipment estimated when maintenance or other action is carried out. The term "maintenance or other action" refers to an action in which the current equipment is maintained or repaired after the current equipment has become obsolete or broken down, or has undergone a periodic inspection. The term "third performance data" refers to performance data of new equipment. The term "maintenance or other action cost data" refers to data of the required cost for the maintenance or other action. The term "new-equipment installation cost data" refers to data of the required cost for installing the new equipment. The first estimated running cost calculation means calculates a first running cost estimate using the first estimated performance data. As used herein, the term "first running cost estimate" refers to the estimated value of the running cost of the current equipment when the no-maintenance action is carried out. The second estimated running cost calculation means uses the second estimated performance data to calculate a second running cost estimate. As used herein, the term "second running cost estimate" refers to the estimated value of the running cost of the current equipment when the maintenance or other action is carried out. The third estimated running cost calculation means uses the third performance data to calculate a third running cost estimate. As used herein, the term "third running cost estimate" refers to the estimated value of the running cost of the new equipment. The no-maintenance action total cost estimate calculation means uses at least a first running cost estimate to calculate a no-maintenance action total cost estimate. As used herein, the term "no-maintenance action total cost estimate" refers to the estimated value of the total cost for the prescribed period of time required when the no-maintenance action is carried out. The maintenance or other action total cost estimate calculation means uses at least the second running cost estimate and the maintenance or other action cost data to calculate a maintenance or other action total cost estimate. As used herein, the term "maintenance or other action total cost estimate" refers to the estimated value of the total cost for the prescribed period of time required when the maintenance or other action is carried out. The new-equipment installation total cost estimate calculation means uses at least the third running cost estimate and the new-equipment installation cost data to calculate a new-equipment installation total cost estimate. As used herein, the term "new-equipment installation total cost estimate" refers to the estimated value of the total cost for the prescribed period of time required when the current equipment is discarded after the current equipment has become obsolete or broken down, or after a periodic inspection has been performed, and the new equipment is installed. The output means outputs the no-maintenance action total cost estimate, the maintenance or other action total cost estimate, and the new-equipment installation total cost estimate.

Here, the input means is first used to input equipment data that includes the first estimated performance data, second estimated performance data, third performance data, maintenance or other action cost data, and new-equipment installation cost data. Next, the first estimated running cost calculation means uses the first estimated performance data to calculate a first running cost estimate. Next, the second estimated running cost calculation means uses the second estimated performance data to calculate a second running cost estimate. Subsequently, the third estimated running cost calculation means uses the third performance data to calculate a third running cost estimate. Next, the no-maintenance action total cost estimate calculation means uses at least the first running cost estimate to calculate a no-maintenance action total cost estimate. Next, the maintenance or other action total cost estimate calculation means calculates the maintenance or other action total cost estimate by at least using the second running cost estimate and the maintenance or other action cost data. Next, the new-equipment installation total cost estimate calculation means uses at least the third running cost estimate and the new-equipment installation cost data to calculate a new-equipment installation total cost estimate. The output means then outputs the no-maintenance action total cost estimate, the maintenance or other action total cost estimate, and the new-equipment installation total cost estimate. For this reason, if such output results can for example, be printed in a pamphlet or otherwise published together with conventional graphs, tables, and the like, and the pamphlet provided to customers, the customers can obtain, from the aspect of total cost required in a fixed amount of time, the most effective action method for current equipment at any time, the best timing for installing new equipment, and other information. Therefore, better satisfaction can be provided to all customers of a new-equipment sales business, repair service businesses, and inspection and maintenance service businesses, and the brand strength of a company can therefore be enhanced.

An equipment cost estimate calculation program according to a tenth aspect of the present invention has a first estimated running cost calculation step, a second estimated running cost calculation step, a third estimated running cost calculation step, a no-maintenance action total cost estimate calculation step, a maintenance or other action total cost estimate calculation step, a new-equipment installation total cost estimate calculation step, and an output step. In the first estimated running cost calculation step, first estimated performance data is used to calculate in the computer a first running cost estimate, which is the estimated value of the running cost of current equipment when a no-maintenance action is carried out. As used herein, the term "first estimated performance data" refers to estimated performance data of current equipment when the no-maintenance action is carried out. The term "no-maintenance action" refers to an action in which the current equipment is not maintained or repaired but is left as-is after the current equipment has become obsolete or broken down, or has undergone a periodic inspection. In the second estimated running cost calculation step, second estimated performance data is used to calculate in the computer a second running cost estimate, which is the estimated value of the running cost of current equipment when maintenance or other action is carried out. As used herein, the term "second estimated performance data" refers to performance data of the current equipment estimated when maintenance or other action is carried out. The term "maintenance or other action" refers to an action in which the current equipment is maintained or repaired after the current equipment has become obsolete or broken down, or has undergone a periodic inspection. In the third estimated running cost calculation step, third performance data is used to calculate in the computer a third running cost estimate, which is the estimated value of the running cost of new equipment. As used herein, the term "third performance data" refers to performance data of new equipment. In the no-maintenance action total cost estimate calculation step, a first running cost estimate is at least used to calculate in the computer the no-maintenance action total cost estimate, which is the estimated value of the total cost for the prescribed period of time required when the no-maintenance action is carried out. In the maintenance or other action total cost estimate calculation step, the second running cost estimate and the maintenance or other action cost data are at least used to-calculate in the computer the maintenance or other action total cost estimate, which is the estimated value of the total cost for the prescribed period of time required when the maintenance or other action is carried out. As used herein, the term "maintenance or other action cost data" refers to cost data required for the maintenance or other action. In the new-equipment installation total cost estimate calculation step, the third running cost estimate and the new-equipment installation cost data are at least used to calculate in the computer the new-equipment installation total cost estimate, which is the estimated value of the total cost for the prescribed period of time required when the current equipment is discarded after the current equipment has become obsolete or broken down, or after a periodic inspection has been performed, and the new equipment is installed. As used herein, the term "new-equipment installation cost data" refers to cost data required for installation of new equipment. In the output step, the no-maintenance action total cost estimate, the maintenance or other action total cost estimate, and the new-equipment installation total cost estimate are output from the computer. The values and data used in the estimated cost calculation program may be inputted or stored in advance in a storage unit.

When the program is executed, first, in the first estimated running cost calculation step, the computer uses the first estimated performance data to calculate a first running cost estimate. Next, in the second estimated running cost calculation step, the computer uses the second estimated performance data to calculate a second running cost estimate. Next, in the third estimated running cost calculation step, the computer uses the third performance data to calculate a third running cost estimate. Subsequently, in the no-maintenance action total cost estimate calculation step, the computer uses at least a first running cost estimate to calculate a no-maintenance action total cost estimate. Next, in the maintenance or other action total cost estimate calculation step, the computer uses at least the second running cost estimate and the maintenance or other action cost data to calculate a maintenance or other action total cost estimate. Next, in the new-equipment installation total cost estimate calculation step, the computer uses at least the third running cost estimate and the new-equipment installation cost data to calculate a new-equipment installation total cost estimate. In the output step, the computer outputs the no-maintenance action total cost estimate, the maintenance or other action total cost estimate, and the new-equipment installation total cost estimate. Consequently, if, for example, such output results can be printed in a pamphlet or otherwise published together with conventional graphs, tables, and the like, and the pamphlet provided to customers, the customers can obtain the most effective action method for current equipment at any time, the best timing for installing new equipment, and other information, from the aspect of total cost required in a fixed amount of time. Therefore, the level of satisfaction of all customers of a new-equipment sales business, repair service businesses, and inspection and maintenance service businesses can be improved, and the brand strength of a company can therefore be enhanced.

An equipment cost estimate calculation apparatus according to an eleventh aspect of the present invention has a storage unit, a first estimated running cost calculation means, a second estimated running cost calculation means, a third estimated running cost calculation means, a no-maintenance action total cost estimate calculation means, a maintenance or other action total cost estimate calculation means, a new-equipment installation total cost estimate calculation means, and an output means. The storage unit is used to store equipment data, including first estimated performance data, second estimated performance data, third performance data, maintenance or other action cost data, and new-equipment installation cost data. As used herein, the term "first estimated performance data" refers to estimated performance data of current equipment when the no-maintenance action is carried out. The term "no-maintenance action" refers to an action in which the current equipment is not maintained or repaired but is left as-is after the current equipment has become obsolete or broken down, or has undergone a periodic inspection. As used herein, the term "second estimated performance data" refers to performance data of the current equipment estimated when maintenance or other action is carried out. The term "maintenance or other action" refers to an action in which the current equipment is maintained or repaired after the current equipment has become obsolete or broken down, or has undergone a periodic inspection. The term "third performance data" refers to performance data of new equipment. The term "maintenance or other action cost data" refers to cost data required for the maintenance or other action. The term "new-equipment installation cost data" refers to cost data required for installation of new equipment. The first estimated running cost calculation means uses the first estimated performance data to calculate the first running cost estimate. As used herein, the term "first running cost estimate" refers to the estimated value of the running cost of the current equipment when the no-maintenance action is carried out. The second estimated running cost calculation means uses the second estimated performance data to calculate a second running cost estimate. As used herein, the term "second running cost estimate" refers to the estimated value of the running cost of the current equipment when the maintenance or other action is carried out. The third estimated running cost calculation means uses the third performance data to calculate a third running cost estimate. As used herein, the term "third running cost estimate" refers to the estimated value of the running cost of the new equipment. The no-maintenance action total cost estimate calculation means uses at least the first running cost estimate to calculate a no-maintenance action total cost estimate. As used herein, the term "no-maintenance action total cost estimate" refers to the estimated value of the total cost for the prescribed period of time required when the no-maintenance action is carried out. The maintenance or other action total cost estimate calculation means uses at least the second running cost estimate and the maintenance or other action cost data to calculate the maintenance or other action total cost estimate. As used herein, the term "maintenance or other action total cost estimate" refers to the estimated value of the total cost for the prescribed period of time required when the maintenance or other action is carried out. The new-equipment installation total cost estimate calculation means uses at least the third running cost estimate and the new-equipment installation cost data to calculate the new-equipment installation total cost estimate. As used herein, the term "new-equipment installation total cost estimate" refers to the estimated value of the total cost for the prescribed period of time required when the current equipment is discarded after the current equipment has become obsolete or broken down, or after a periodic inspection has been performed, and the new equipment is installed. The output means outputs the no-maintenance action total cost estimate, the maintenance or other action total cost estimate, and the new-equipment installation total cost estimate from the computer.

First, here, the first estimated running cost calculation means uses the first estimated performance data held in the storage unit to calculate a first running cost estimate. Next, the second estimated running cost calculation means uses the second estimated performance data held in the storage unit to calculate the second running cost estimate. Subsequently, the third estimated running cost calculation means uses the third performance data held in the storage unit to calculate the third running cost estimate. Next, the no-maintenance action total cost estimate calculation means uses at least the first running cost estimate to calculate the no-maintenance action total cost estimate. Next, the maintenance or other action total cost estimate calculation means uses at least the second running cost estimate and the maintenance or other action cost data held in the storage unit to calculate the maintenance or other action total cost estimate. Next, the new-equipment installation total cost estimate calculation means uses at least the third running cost estimate and the new-equipment installation cost data held in the storage unit to calculate the new-equipment installation total cost estimate. The output means then outputs the no-maintenance action total cost estimate, the maintenance or other action total cost estimate, and the new-equipment installation total cost estimate. Consequently, if, for example, such output results can be printed in a pamphlet or otherwise published together with conventional graphs, tables, and the like, and the pamphlet provided to customers, the customers can obtain the most effective action method for current equipment at any time, the best timing for installing new equipment, and other information, from the aspect of total cost required in a fixed amount of time. Therefore, better satisfaction can be provided to all customers of a new-equipment sales business, repair service businesses, and inspection and maintenance service businesses, and the brand strength of a company can therefore be enhanced.

### BRIEF EXPLANATION OF DRAWINGS

FIG. 1 is a cost graph for posting in a report output by a conventional program.
FIG. 2 is an example of a table for posting in a report output by an estimated cost calculation apparatus according to the present invention.
FIG. 3 is an example of a graph for posting in a report output by the estimated cost calculation apparatus according to the present invention.
FIG. 4 is an example of a graph for posting in a report output by the estimated cost calculation apparatus according to the present invention.
FIG. 5 is block diagram of the estimated cost calculation apparatus according to the present invention.
FIG. 6 is a flowchart showing the processing flow carried out by the estimated cost calculation apparatus according to the present invention.
FIG. 7 is a carbon dioxide gas emission forecast graph for posting in a report output by a conventional program.

### DESCRIPTION OF REFERENCE SYMBOLS

- 40: Cost estimate calculation apparatus for an air conditioner
- 41: Main body
- 42: Central processing device
- 43: Main memory
- 44: Hard disk
- 45: Database
- 46: Program
- 47: Modem
- 48: Network controller
- 49: Bus line
- 51: Display
- 52: Mouse
- 53: Keyboard
- 60: Air conditioner
- 70: Public telephone line
- 80: Information terminal

### BEST MODE FOR CARRYING OUT THE INVENTION

A cost estimate calculation apparatus for an air conditioner is described in the preferred embodiments of the present invention.

### Air Conditioner Cost Estimation Service

In an air conditioner cost estimation service, a report that can be easily understood is issued at periodic inspection times for customers with whom a periodic inspection contract has been concluded, at times of breakdowns or inspections required by law for customers who have not requested a periodic inspection, and at other times when suitably required for customers who have requested remote monitoring services (when an abnormality notification has been received, when predicted breakdown information has been received, when the abnormality indications are found in operational data trends for the air conditioner, or at other times), in order to determine whether it is best from the aspect of future costs to take no action and perform no maintenance or to perform repairs on the current air conditioner (hereinbelow referred to as "no-maintenance action"), whether it is best from the aspect of future costs to maintain or repair the current air conditioner (hereinbelow referred to as "maintenance or other action"), or whether it is best from the aspect of future costs to discard the current air conditioner and purchase a new, energy-efficient air conditioner (hereinafter referred to as "new purchase action"). In the case of the maintenance or other action, the system is configured to make it apparent whether temporary maintenance or repair (hereinbelow referred to as "emergency maintenance or other action") is best from the aspect of future costs, or whether complete maintenance or repair (hereinafter referred to as "complete maintenance or other action") is best from the aspect of future costs. Here, an example of a difference between the emergency maintenance or other action and the complete maintenance or other action is provided. For example, when refrigerant gas is leaking, the equipment is merely recharged with refrigerant by the emergency maintenance or other action, or the complete maintenance or other action can be implemented to identify the location of the refrigerant gas leak and to plug the leak, or to add the refrigerant after the pipe is exchanged. The latter incurs a higher cost than the former since a relatively significant amount of time is required for the service in which the location of the refrigerant gas leak is identified.

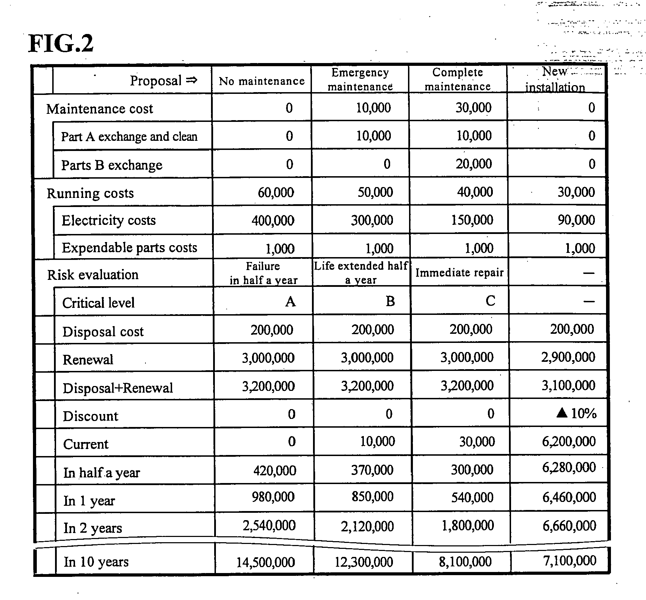

FIGS. 2, 3, and 4 show an example of a table and graph printed in the report described above. There are also cases in which the report shows the residual life expectancy of the current air conditioner, time series information of the predicted value of carbon dioxide emission of the current air conditioner and the recommended product (air conditioner), a regulatory line of the energy conservation law, and other information.

The table shown in FIG. 2 shows the costs that will be incurred for the cases of the no-maintenance action, the emergency maintenance or other action, the complete maintenance or other action, and the new-equipment purchase action, respectively. The maintenance cost is the cost required for maintenance and repair. The maintenance cost is naturally zero for no-maintenance action because maintenance and repair are not carried out at all in the case of the no-maintenance action. In the case of the emergency maintenance or other action, maintenance costs can be held in check because only simple maintenance is performed. In the case of complete maintenance or other action, the air conditioner is maintained or repaired to a substantially normal state, so the repairs are reflected in the costs. The maintenance cost is also zero in the case that new equipment is purchased because maintenance in not required. The running cost is the cost required as a result of operating the equipment, and is the cost of, for example, expendable parts and expenses for the amount of energy that the air conditioner consumes. The running cost is determined using statistical data analysis, case-based corollaries, topological case-based modeling (TCBM: a modeling technique in which a framework of case-based corollaries is applied, and which can be applied to common cases in which the continuity of an input/output relationship is valid based on a topological concept), and the like. In the case of the no-maintenance action, the running costs are higher because the air conditioner is forced to operate in poor condition. If the emergency maintenance or other action is carried out, the running costs are lower than with the no-maintenance action because the condition of the air conditioner is somewhat improved. If the complete maintenance or other action is carried out, the running costs are even lower because the condition of the air conditioner is improved to a substantially normal condition. In the case of the new-equipment installation action, the running costs are even lower because a new, energy-efficient air conditioner is installed. However, in this case, new installation costs for the new type of air conditioner, disposal costs for the current air conditioner, and other costs are separately required. In the risk evaluation section, on the other hand, the predicted risk for each case is noted. In the case of the no-maintenance action, it is predicted that the air conditioner will be entirely unusable in half a year. Such a residual life expectancy is determined based on an analysis of past operational data (including an analysis of power consumption data), patterns at system failure, cumulative usage time, the number of times the system has been switched ON/OFF, the distance to reaching the usage limit, and other experience, know-how, and the like. Furthermore, the disposal cost of the current air conditioner, the new-installation cost, and the like are noted in this table for all cases. Also noted in the table is the estimated value of the total cost required after half a year, 1 year, 2 years, 5 years, and 10 years in each case. These numbers are the sum of the maintenance costs, running cost, other disposal costs, new-installation costs, and other costs. However, there are cases in which the running costs vary over time. Also, a 10% discount is indicated in the table when replacements are actively purchased. This is a design to encourage early replacement.

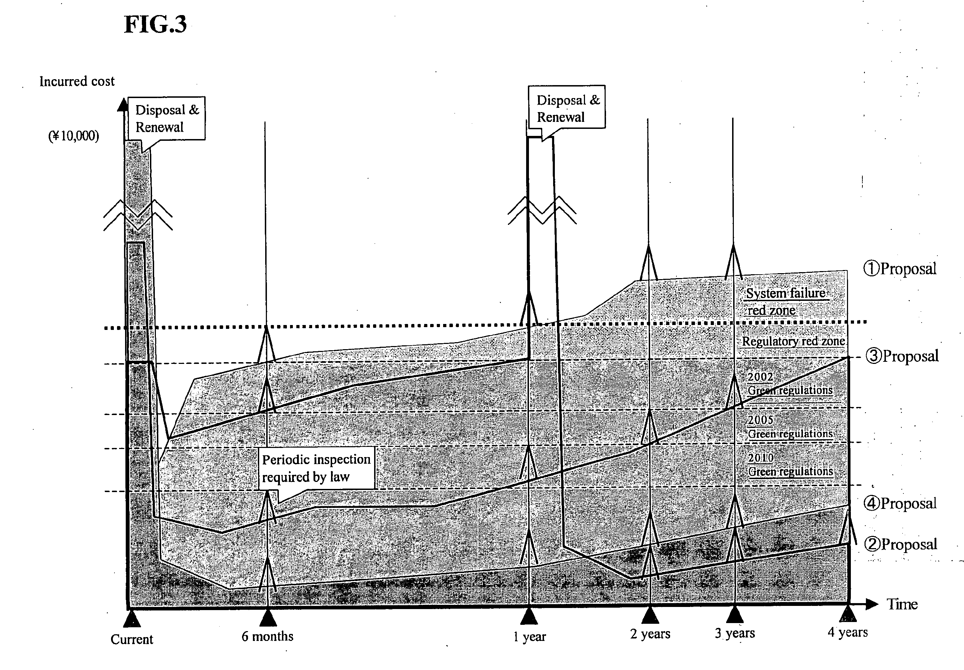

The graph shown in FIG. 3 reflects the change over time in the estimated value of the total cost shown in the table in FIG. 2. In the table of FIG. 2, the estimated value of the total cost is shown through that year. Which costs were incurred at which point in time are shown in this graph. The integrated value of the cost variation in each case in the graph matches the estimated value of the total cost shown in FIG. 2. Therefore, the customer can be informed of the most effective action at any time. Consequently, the level of customer satisfaction can be improved. Also shown in the graph are the points at which the system will fail, the points at which the energy conservation law will be violated, and the points at which green regulations will be violated. Therefore, a customer who refers to the graph can be aware of amount of residual life expectancy of the air conditioner that the customer is using, and at about what time the customer's air conditioner will violate the law. As a result, the customer can select a suitable action in accordance with conditions without being bound solely by a self-managed budget.

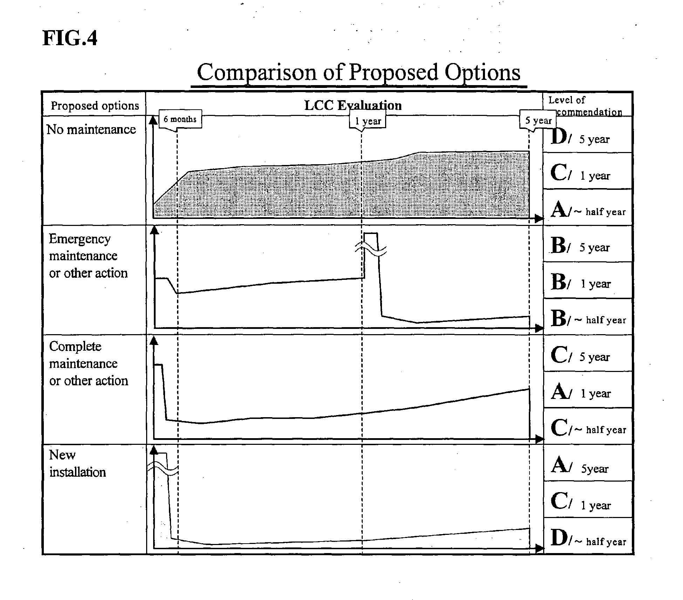

In the table shown in FIG. 4, the graph shown in FIG. 2 is divided into the actions, and the level of recommendation of each of the actions is added to the side columns. The levels of recommendation are ranked from A to D, with A being the highest rank. For example, in the case of the no-maintenance action, "the action can be recommended from the aspect of cost for only half a year, but the action cannot be recommended to be continued for 5 years." With this table; the customer can easily make a judgment as to which action is the most appropriate without reading the graph.

Described in detail below is a cost estimate calculation apparatus for performing a cost estimation service for customers who have requested remote monitoring services.

### Constitution of a Cost Estimate Calculation Apparatus for an Air Conditioner

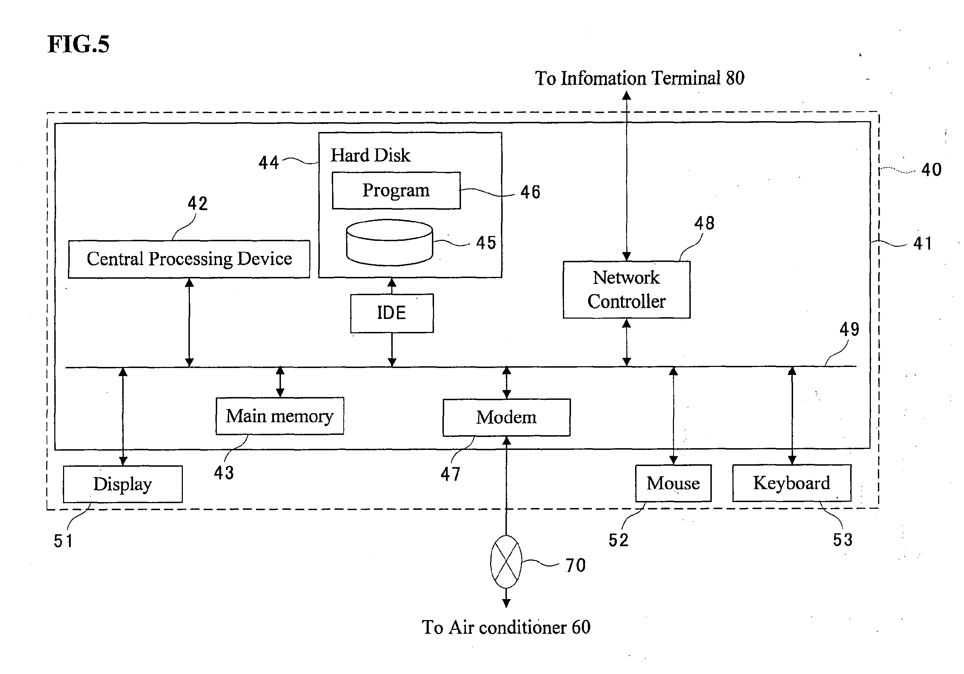

A cost estimate calculation apparatus 40 for an air conditioner primarily comprises a main body 41, a display 51, a keyboard 53, and a mouse 52, as shown in FIG. 5. The display 51, keyboard 53, and mouse 52 are connected to a central processing device 42 via a bus line 49.

### Constituent Elements of a Cost Estimate Calculation Apparatus for an Air Conditioner

(1) Main body
   The main body 41 is provided with a network controller 48, a modem 47, a hard disk 44, a central processing device 42, and a main memory 43. The network controller 48, modem 47, and main memory 43 are connected to the central processing device 42 via the bus line 49. The hard disk 44 is connected to the central processing device 42 and main memory 43 via an IDE interface and the bus line 49. The modem 47 is connected to an air conditioner 60, which is the target of the service. The network controller 48 is connected to an information terminal 80.
   The network controller 48 mediates the provision of information to the information terminal 80 connected via a network. The modem 47 receives operational data that contains the power consumption data (hereinbelow referred to as "actual power consumption data") of the air conditioner 60 sent from the air conditioner 60 via a public telephone line 70. The program 46 and database 45 are stored in the hard disk 44. Various commands for carrying out various processing operations in the central processing device 42 are written in the program 46. The term "various commands" refers to the following commands: A data storage command for storing actual power consumption data of the air conditioner 60, for example, in the database 45 in accordance with rules that are determined in advance; an input page display command whereby an input page for inputting data required for creating graphs and tables is displayed on the display 51; a running cost estimate calculation command for calculating the value of the running costs of the air conditioner 60 estimated from actual power consumption data received from the air conditioner 60 or from measured power consumption data that is measured in advance under various conditions; a first storage command whereby the running cost estimate thus calculated is stored in the database 45; a total cost estimate calculation command for calculating the estimated value of the total cost required for the air conditioner 60 for a prescribed amount of time; a second storage command whereby the estimated value of the total cost thus calculated is stored in the database 45; and a graph or other type of display command for displaying the estimated value of the total cost as a graph, table, or the like on the display 51 and the display of the information terminal 80.
   The main memory 43 reads from the hard disk 44 the data and commands of the program that are required in the processing operations, and temporarily stores the data and commands.
   The central processing device 42 executes the commands of the program stored in the main memory 43.
(2) Display
   The display 51 displays input pages, output results, and other information.
(3) Keyboard
   The keyboard 53 is used to input text information and perform other tasks.
(4) Mouse
The mouse 52 is used to select information, move the cursor, and perform other tasks.

### Flow of the Calculation and Output of the Total Cost Estimate

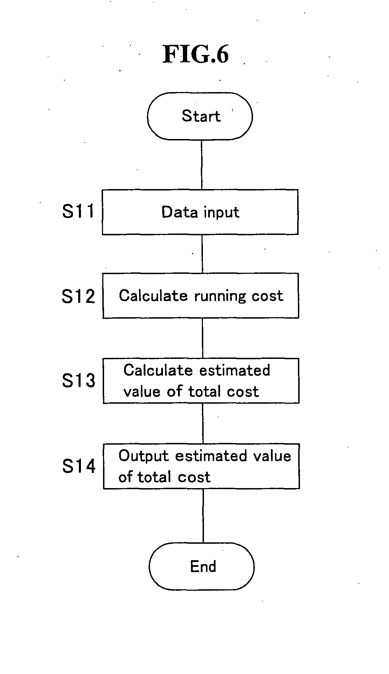

FIG. 6 shows a flowchart that describes the flow of the calculation and output of total cost estimate.

In step S11 in FIG. 6, the central processing device 42 receives an input page display command temporarily stored in the main memory 43, and displays an input page on the display 51. When the input page is displayed, the operator or the like uses the keyboard 53 and mouse 52 to input data. When the data has been input, the operator or the like presses a command button or carries out another action to initiate some event. The processing in step S12 is then started. In step S 12, the central processing device 42 receives a running cost estimate calculation command temporarily stored in the main memory 43, and calculates the running cost estimate of the air conditioner 60 separately for the no-maintenance action, the maintenance or other action, and the new-equipment installation action by using the actual power consumption data received from the air conditioner 60 or the measured power consumption data that is measured in advance under various conditions. These running cost estimates are stored in a database 45 by using a first storage command. In step S 13, the central processing device 42 receives a total cost estimate calculation command that is temporarily stored in the main memory 43, and the estimated value of the total cost of the air conditioner for a prescribed period of time is calculated for the no-maintenance action, the maintenance or other action, and the new installation case. The estimated value is calculated based on the running cost estimate of air conditioner for the no-maintenance action, the maintenance or other action, and the new installation case, respectively. These estimated values of the total cost are stored in the database 45 by using a second storage, command. In step S 14, the central processing device 42 receives a graph or other type of display command that is temporarily stored in the main memory 43, and tables and graphs such as those in FIGS. 2, 3, and 4 are displayed on the display 51 and the display of information terminal 80.

### Features of the Cost Estimate Calculation Apparatus for an Air Conditioner

**(1)** With the cost estimate calculation apparatus 40 for an air conditioner of the present embodiment, graphs, tables, and the like that are printed in a report and can be easily understood are output in order to determine whether it is best from the aspect of future costs to take no action and perform no maintenance or repair on the current air conditioner 60, whether it is best from the aspect of future costs to maintain or repair the current air conditioner 60, or whether it is best from the aspect of future costs to discard the current air conditioner 60 and purchase a new, energy-efficient air conditioner. Consequently, if such output results can, for example, be printed in a pamphlet or otherwise published together with conventional graphs, tables, and the like, and the pamphlet provided to customers, the customers can obtain, from the aspect of total cost required in a fixed amount of time, the most effective action method for the current air conditioner 60 at any time, the best timing for installing a new energy efficient air conditioner, and other information. Therefore, better satisfaction can be provided to all the customers of a new-equipment sales business, repair service businesses, and inspection and maintenance service businesses, and the brand strength of a company can therefore be enhanced.
**(2)** With the cost estimate calculation apparatus 40 for an air conditioner of the present embodiment, graphs and tables are output that make it apparent whether temporary maintenance or repair is best from the aspect of future costs, or whether complete maintenance or repair is best from the aspect of future costs, in the case that the current air conditioner 60 will be maintained or repaired. Consequently, the customer is provided with a wider range of choices, and customer satisfaction can be expected to improve.
**(3)** With the cost estimate calculation apparatus 40 for an air conditioner of the present embodiment, the total cost estimate in the case of the no-maintenance action, the total cost estimate in the case of the maintenance or other action, and the total cost estimate in the case of the new-equipment installation action are output together in a table and graph. Consequently, the customer can easily compare and consider these total cost estimates.
**(4)** With the cost estimate calculation apparatus 40 for an air conditioner of the present embodiment, the disposal cost is also reflected in the calculation of the total cost. Therefore, the customer can study the total cost estimate with greater accuracy.
**(5)** With the cost estimate calculation apparatus 40 for an air conditioner of the present embodiment, the data of the residual life expectancy of the current air conditioner 60 is also sometimes printed. Consequently, the customer can be informed at any time of the estimated end of the term of the current air conditioner 60. Therefore, the customer can be encouraged to maintain/repair the current air conditioner or to install a new, energy-saving air conditioner at an appropriate time. When the residual life expectancy is very short, it is also possible to consider recommending taking no action or taking another action.
**(6)** With the cost estimate calculation apparatus 40 for an air conditioner of the present embodiment, a regulatory line of energy conservation laws is output. Consequently, business or the like that desire to maintain a clean corporate image can be encouraged to maintain/repair the current air conditioner or to purchase a new, energy-saving air conditioner.
**(7)** With the cost estimate calculation apparatus 40 for an air conditioner of the present embodiment, various types of information are output in graphs and tables. Consequently, information can be provided to customers in a more easily understood format.

### <Modified Examples>

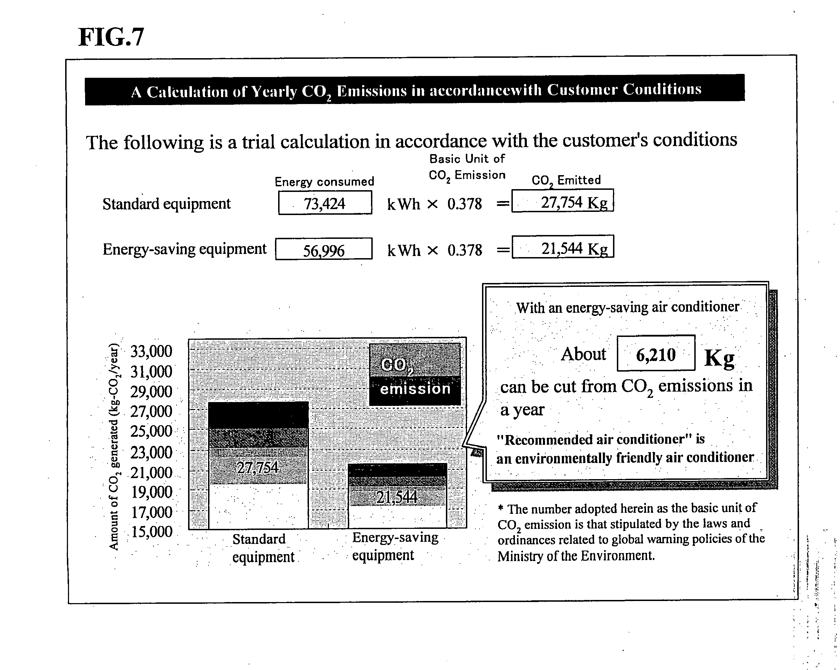

**(1)** In the embodiment described above, operational data was collected from the air conditioner 60, but in the case that the current air conditioner 60 is connected to a controller or the like, operational data may be collected from the controller or the like.
**(2)** In the embodiment described above, operational data was collected from the current air conditioner 60, but in the case that the air conditioner 60 does not have a modem or another connection port to a public telephone line, a storage unit may be provided to the air conditioner 60, and operational data may be gathered into the storage unit. In such a configuration, a service engineer or the like can copy or otherwise obtain the operational data at each.periodic inspection and carry the data back to the office. If the storage unit is configured to be removable or configured so that a storage medium is removable, the storage unit or storage medium may be carried back to the office. At this time, a new storage unit or storage medium may be mounted or inserted, and the removed storage unit or storage medium may be returned to the customer at a later date. In such a configuration, customers who have not requested a remote monitoring service can also be provided with a cost estimation service.
**(3)** In the embodiment described above, power consumption data was collected from the air conditioner 60, but in lieu thereof, the time dependency of the power consumption of the air conditioner can be measured in advance and made into a function. In such a configuration, the approximate operating time from the time of installation of the air conditioner 60 can be estimated and suitable power consumption data can be obtained. Customers who have not requested a remote monitoring service can thereby be also provided with a cost estimation service.
**(4)** With the cost estimate calculation apparatus 40 for an air conditioner of the embodiment described above, the estimated value of the total cost of the air conditioner for a prescribed period of time is displayed in a graph on the display 51 separately for the no-maintenance action, the maintenance or other action, and the new-equipment installation action, but when a printer is connected, the graph may be directly printed to the printer without being displayed on a display.
**(5)** With the cost estimate calculation apparatus 40 for an air conditioner of the embodiment described above, the estimated value of the total cost of the air conditioner for a prescribed period of time is displayed in a graph on the display 51 separately for the no-maintenance action, the maintenance or other action, and the new-equipment installation action, but in lieu thereof, the graph may be output to a file. Also, the file may be attached to electronic mail and automatically transmitted to the information terminal 80.
**(6)** With the cost estimate calculation apparatus 40 for an air conditioner of the embodiment described above, a carbon dioxide emission forecast is not calculated, but a carbon dioxide emission forecast may also be expressed in a table such as FIG. 2 or in a graph or the like such as FIG. 3. This is due to the fact that the carbon dioxide emission forecast increases when the operating conditions of the current air conditioner become more stringent and power consumption increases. Conventionally, it was possible to present a customer only with a proposal such as the one shown FIG. 7, but if points or other aspects of the regulatory line are simultaneously displayed, customers can easily determine the time at which performance is likely to violate the regulation, and customers can request suitable action from a professional or the like.
**(7)** With the cost estimate calculation apparatus 40 for an air conditioner of the embodiment described above, various types of data were required to be input prior to calculating the total cost estimate, but in the case that various types of data can be registered in advance in a database or the like, the advance input can be dispensed with. The input work load can thereby be reduced or eliminated.

### INDUSTRIAL APPLICABILITY

The equipment cost estimate calculation program and equipment cost estimate calculation apparatus of the present invention can create graphs or the like so that potential customers, in addition to customers who will purchase new equipment and customers that are considering replacement of standard equipment with energy-saving equipment, can be effectively encouraged to purchase new equipment. Using the program and apparatus also makes it possible to carry out a consulting business for customers and others in the same line of business who are considering a similar business model.

## Claims

1. An equipment cost estimate calculation program (46), comprising:
an input prompt step for issuing a prompt to present a computer (40) with equipment data that includes
first estimated performance data, which is performance data of current equipment (60) estimated when a no-maintenance action is carried out in which said current equipment (60) is not maintained or repaired but is left as-is after said current equipment (60) has become obsolete or broken down, or has undergone a periodic inspection,
second estimated performance data, which is performance data of said current equipment (60) estimated when maintenance or other action is carried out in which said current equipment (60) is maintained or repaired after said current equipment (60) has become obsolete or broken down, or has undergone a periodic inspection,
third performance data, which is performance data of new equipment, maintenance or other action cost data, which is data of the required cost for said maintenance or other action, and
new-equipment installation cost data, which is data of the required cost for installing said new equipment;
a first estimated running cost calculation step for using said first estimated performance data and calculating in said computer (40) a first running cost estimate, which is the estimated value of the running cost of said current equipment (60) when said no-maintenance action is carried out;
a second estimated running cost calculation step for using said second estimated performance data and calculating in said computer (40) a second running cost estimate, which is the estimated value of the running cost of said current equipment (60) when said maintenance or other action is carried out;
a third estimated running cost calculation step for using said third performance data and calculating in said computer (40) a third running cost estimate, which is the estimated value of the running cost of said new equipment;
a no-maintenance action total cost estimate calculation step for at least using said first running cost estimate and calculating in said computer (40) a no-maintenance action total cost estimate, which is the estimated value of the total cost for a prescribed period of time required when said no-maintenance action is carried out;
a maintenance or other action total cost estimate calculation step for at least using said second running cost estimate and said maintenance or other action cost data, and
calculating in said computer (40) a maintenance or other action total cost estimate, which is the estimated value of the total cost for said prescribed period of time required when said maintenance or other action is carried out;
a new-equipment installation total cost estimate calculation step for at least using said third running cost estimate and said new-equipment installation cost data and
calculating in said computer (40) a new-equipment installation total cost estimate, which is the estimated value of the total cost for said prescribed period of time required when said current equipment (60) is discarded after said current equipment (60) has become obsolete or broken down, or undergone said periodic inspection, and
said new equipment is installed; and
an output step for outputting from said computer (40) said no-maintenance action total cost estimate, said maintenance or other action total cost estimate, and said new-equipment installation total cost estimate.

2. The equipment cost estimate calculation program (46) as recited in Claim 1, wherein
a first repair pattern or a first maintenance pattern, and a second repair pattern or a second maintenance pattern are included in said repair or said maintenance.

3. The equipment cost estimate calculation program (46) as recited in Claim 1 or Claim 2, wherein
said no-maintenance action total cost estimate, said maintenance or other action total cost estimate, and said new-equipment installation total cost estimate are output to the same sheet or same page in said computer (40) in said output step.

4. The equipment cost estimate calculation program (46) as recited in any of Claim 1 to Claim 3, wherein
said equipment data further includes discard cost data of said current equipment, and said new-equipment installation total cost estimate is calculated in said computer (40) in said new-equipment installation total cost estimate calculation step by using said third running cost estimate, said new-equipment installation cost data, and said discard cost data of said current equipment (60).

5. The equipment cost estimate calculation program (46) as recited in any of Claim 1 to Claim 5,
further comprising a residual life expectancy calculation step for calculating in said computer (40) the value of the residual life expectancy of said current equipment (60)
or said new equipment by using said first estimated performance data, said second estimated performance data, and said third performance data
wherein,
the value of said residual life expectancy is further output from said computer in said output step.

6. The equipment cost estimate calculation program (46) as recited in any of Claim 1 to Claim 5,
further comprising a carbon dioxide emission forecast calculation step for calculating in said computer (40) the carbon dioxide emission forecast of said current equipment (60) or said new equipment by using said first estimated performance data, said second estimated performance data, and said third performance data
wherein,
said carbon dioxide emission forecast is further output from said computer (40) in said output step.

7. The equipment cost estimate calculation program (46) as recited in any of Claim 1 to Claim 6, wherein
a regulatory line is further output from said computer (40) in said output step.

8. The equipment cost estimate calculation program (46) as recited in any of Claim 1 to Claim 7, wherein
the result of said output is displayed as a graph.

9. An equipment cost estimate calculation apparatus (40), comprising:
input means (52, 53) for inputting equipment data that includes
first estimated performance data, which is performance data of current equipment (60) estimated when a no-maintenance action is carried out in which said current equipment (60) is not maintained or repaired but is left as-is after said current equipment (60) has become obsolete or broken down, or has undergone a periodic inspection,
second estimated performance data, which is performance data of said current equipment (60) estimated when maintenance or other action is carried out in which said current equipment (60) is maintained or repaired after said current equipment (60) has become obsolete or broken down, or has undergone a periodic inspection,
third performance data, which is performance data of new equipment;
maintenance or other action cost data, which is data of the required cost for said maintenance or other action, and
new-equipment installation cost data, which is data of the required cost for installing said new equipment;
a first estimated running cost calculation means (42) for using said first estimated performance data and calculating a first running cost estimate, which is the estimated value of the running cost of said current equipment (60) when said no-maintenance action is carried ut;
a second estimated running cost calculation means (42) for using said second estimated performance data and calculating a second running cost estimate, which is the estimated value of the running cost of said current equipment (60) when said maintenance or other action is carried out;
a third estimated running cost calculation means (42) for using said third performance data and calculating a third running cost estimate, which is the estimated value of the running cost of said new equipment;
a no-maintenance action total cost estimate calculation means (42) for at least using said first running cost estimate and calculating a no-maintenance action total cost estimate, which is the estimated value of the total cost for a prescribed period of time required when said no-maintenance action is carried out;
a maintenance or other action total cost estimate calculation means (42) for at least using said second running cost estimate and said maintenance or other action cost data, and calculating a maintenance or other action total cost estimate, which is the estimated value of the total cost for said prescribed period of time required when said maintenance or other action is carried out;
a new-equipment installation total cost estimate calculation means (42) for at least using said third running cost estimate and said new-equipment installation cost data and calculating a new-equipment installation total cost estimate, which is the estimated value of the total cost for said prescribed period of time required when said current equipment (60) is discarded after said current equipment (60) has become obsolete or broken down, or has undergone a periodic inspection, and said new equipment is installed; and
an output means (51) for outputting said no-maintenance action total cost estimate, said maintenance or other action total cost estimate, and said new-equipment installation total cost estimate.

10. An equipment cost estimate calculation program (46), comprising:
a first estimated running cost calculation step for using said first estimated performance data, which is performance data of current equipment (60) estimated when a no-maintenance action is carried out in which said current equipment (60) is not maintained or repaired but is left as-is after said current equipment (60) has become obsolete or broken down, or has undergone a periodic inspection, and calculating in said computer (40) a first running cost estimate, which is the estimated value of the running cost of said current equipment (60) when said no-maintenance action is carried out;
a second estimated running cost calculation step for using said second estimated performance data, which is performance data of said current equipment (60) estimated when maintenance or other action is carried out in which said current equipment (60) is maintained or repaired after said current equipment (60) has become obsolete or broken down, or has undergone a periodic inspection, and calculating in said computer (40) a second running cost estimate, which is the estimated value of the running cost of said current equipment (60) when said maintenance or other action is carried out;
a third estimated running cost calculation step for using said third performance data, which is new equipment performance data, and calculating in said computer (40) a third running cost estimate, which is the estimated value of the running cost of said new equipment;
a no-maintenance action total cost estimate calculation step for at least using said first running cost estimate and calculating in said computer (40) a no-maintenance action total cost estimate, which is the estimated value of the total cost for a prescribed period of time required when said no-maintenance action is carried out;
a maintenance or other action total cost estimate calculation step for at least using said second running cost estimate and said maintenance or other action cost data, which is data of the required cost for said maintenance or other action, and calculating in said computer (40) a maintenance or other action total cost estimate, which is the estimated value of the total cost for said prescribed period of time required when said maintenance or other action is carried out;
a new-equipment installation total cost estimate calculation step for at least using said third running cost estimate and said new-equipment installation cost data, which is data of the required cost for installing said new equipment, and calculating in said computer (40) a new-equipment installation total cost estimate, which is the estimated value of the total cost for said prescribed period of time required when said current equipment (60) is discarded after said current equipment (60) has become obsolete or broken down, or undergone said periodic inspection, and said new equipment is installed; and
an output step for outputting from said computer (40) said no-maintenance action total cost estimate, said maintenance or other action total cost estimate, and said new-equipment installation total cost estimate.

11. An equipment cost estimate calculation apparatus (40), comprising:
a storage unit (44) for retaining equipment data that includes
first estimated performance data, which is performance data of current equipment (60) estimated when a no-maintenance action is carried out in which said current equipment (60) is not maintained or repaired but is left as-is after said current equipment (60) has become obsolete or broken down, or has undergone a periodic inspection,
second estimated performance data, which is performance data of said current equipment (60) estimated when maintenance or other action is carried out in which said current equipment (60) is maintained or repaired after said current equipment (60) has become obsolete or broken down, or has undergone a periodic inspection,
third performance data, which is performance data of new equipment, maintenance or other action cost data, which is data of the required cost for said maintenance or other action, and
new-equipment installation cost data, which is data of the required cost for installing said new equipment;
a first estimated running cost calculation means (42) for using said first estimated performance data and calculating a first running cost estimate, which is the estimated value of the running cost of said current equipment (60) when said no-maintenance action is carried out;
a second estimated running cost calculation means (42) for using said second estimated performance data and calculating a second running cost estimate, which is the estimated value of the running cost of said current equipment (60) when said maintenance or other action is carried out;
a third estimated running cost calculation means (42) for using said third performance data and calculating a third running cost estimate, which is the estimated value of the running cost of said new equipment;
a no-maintenance action total cost estimate calculation means (42) for at least using said first running cost estimate and calculating a no-maintenance action total cost estimate, which is the estimated value of the total cost for a prescribed period of time required when said no-maintenance action is carried out;
a maintenance or other action total cost estimate calculation means (42) for at least using said second running cost estimate and said maintenance or other action cost data, and calculating a maintenance or other action total cost estimate, which is the estimated value of the total cost for said prescribed period of time required when said maintenance or other action is carried out;
a new-equipment installation total cost estimate calculation means (42) for at least using said third running cost estimate and said new-equipment installation cost data, and calculating a new-equipment installation total cost estimate, which is the estimated value of the total cost for said prescribed period of time required when said current equipment (60) is discarded after said current equipment (60) has become obsolete or broken down, or has undergone a periodic inspection, and said new equipment is installed; and
an output means (51) for outputting said no-maintenance action total cost estimate, said maintenance or other action total cost estimate, and said new-equipment installation total cost estimate.
